# EUROPEAN PATENT APPLICATION

(11) **EP 4 764 090 A1**
(43) Date of publication of application: **24.06.2026**
(21) Application number: 25777321.8
(22) Date of filing: 26.03.2025
(51) Int. Cl.: E02F 9/20, E02F 9/24

(54) **CONSTRUCTION MACHINE**

(30) Priority: 29.03.2024 JP 2024057176
(71) Applicant: Hitachi Construction Machinery Co., Ltd., Tokyo 110-0015 (JP)
(72) Inventor: AMANO, Hiroaki, Tsuchiura-shi, Ibaraki 300-0013 (JP); KANEHAMA, Mitsuhiko, Tsuchiura-shi, Ibaraki 300-0013 (JP); KAYANE, Masahiro, Tsuchiura-shi, Ibaraki 300-0013 (JP); NARAZAKI, Akihiro, Tsuchiura-shi, Ibaraki 300-0013 (JP)
(74) Representative: Manitz Finsterwald Patent- und Rechtsanwaltspartnerschaft mbB
(86) International application number: PCT/JP2025/012283
(87) International publication number: WO 2025/206076

(57) **Abstract**

Disclosed is a construction machine including an additional control valve that connects a bottom-side hydraulic line and a tank-side hydraulic line to each other and connects a rod-side hydraulic line and the tank-side hydraulic line to each other, the bottom-side hydraulic line connecting a bottom side of a hydraulic cylinder that drives a work device and a main control valve to each other, the rod-side hydraulic line connecting a rod side of the hydraulic cylinder and the main control valve to each other. The additional control valve includes a variable relief valve that is provided between the rod-side hydraulic line and the tank-side hydraulic line and that controls a pressure in the rod-side hydraulic line such that the pressure is equal to or lower than a predetermined target pressure, and a check valve that permits only a flow of a hydraulic fluid from the tank-side hydraulic line to the bottom-side hydraulic line. In a case a work mode is switched to a float mode in which work is performed using an own weight of the work device, a meter-in control valve of the main control valve is closed, the target pressure of the variable relief valve is set to the minimum value of a predetermined pressure range, and a hydraulic fluid in the rod-side hydraulic line is discharged into the hydraulic fluid tank. As a result, it is possible to increase operability at the time of float work while suppressing deterioration in control performance and pressure loss.

## Description

### Technical Field

The present invention relates to a construction machine.

### Background Art

In construction machines such as a hydraulic excavator including an articulated front work device, there has been known a construction machine that performs work with a front work device brought into a floating state by establishing connection between a hydraulic working fluid tank and a bottom-side hydraulic chamber or a rod-side hydraulic chamber of a boom cylinder which raises and lowers a boom.

For example, described in Patent Document 1 is a construction machine that controls a position of a boom directional control valve by use of a first region and a second region at the time of lowering a boom and that, in the floating state, performs lowering control using the own weight of a front work device in the first region while interrupting supply of a hydraulic fluid from a pump to a rod-side hydraulic chamber. Moreover, during normal work, the lowering control of the boom in the air is performed in the first region, and the lowering control of the boom after a bucket comes in contact with the ground is performed in the second region in which the pump and the rod hydraulic chamber are connected to each other, thereby securing a pressing force against the ground after the ground contact. That is, the control of the directional control valve at the time of lowering the boom in the air in normal work is common to that in float work, thereby causing no sense of discomfort in operation in a work mode and providing excellent operability.

### Prior Art Document

### Patent Document

Patent Document 1 JP-2021-179079-A

### Summary of the Invention

### Problems to be Solved by the Invention

In a case one directional control valve incorporates two different regions as in the conventional technology described above, however, a spool stroke amount of the directional control valve need to be changed rapidly in order to change an opening rapidly according to a change in pilot pressure. Such a rapid change in spool stroke amount leads to an increase in sensitivity of a change in opening according to the pilot pressure, and hence, there is a possibility that opening controllability may deteriorate. Moreover, the spool stroke amount of the directional control valve is restricted, and hence, it becomes difficult to increase the maximum opening, resulting in a decrease in the maximum opening of a hydraulic supply line. Thus, there is a possibility that an excessive pressure loss may occur.

The present invention has been made in view of the above circumstances, and an object thereof is to provide a construction machine which can increase operability at the time of float work while suppressing deterioration in control performance and pressure loss.

### Means for Solving the Problems

The present application includes a plurality of pieces of means for solving the problems described above. One example thereof is a construction machine including a machine main body, a work device that is rockably mounted on the machine main body, a variable displacement hydraulic pump that is driven by a prime mover incorporated in the machine main body, a hydraulic cylinder that drives the work device by using a hydraulic fluid delivered from the hydraulic pump, a main control valve that is provided between the hydraulic pump and the hydraulic cylinder and controls a flow rate and a direction of a hydraulic fluid supplied from the hydraulic pump to the hydraulic cylinder, an additional control valve that is provided on a hydraulic line respectively connecting a bottom-side hydraulic line connecting the main control valve and a bottom side of the hydraulic cylinder, a rod-side hydraulic line connecting the main control valve and a rod side of the hydraulic cylinder, and a tank-side hydraulic line returning a hydraulic fluid to a hydraulic fluid tank, and a controller that controls the main control valve and the additional control valve on a basis of the operation signals output from the operation device. The main control valve includes at least one meter-in control valve that controls a flow rate of a hydraulic fluid supplied from the hydraulic pump to a rod chamber of the hydraulic cylinder via the rod-side hydraulic line, and at least one meter-out control valve that controls a flow rate of a hydraulic fluid returned from a bottom chamber of the hydraulic cylinder to the hydraulic fluid tank via the bottom-side hydraulic line and the tank-side hydraulic line. The additional control valve includes a variable relief valve that is provided between the rod-side hydraulic line and the tank-side hydraulic line and controls a pressure in the rod-side hydraulic line such that the pressure is equal to or lower than a predetermined target pressure, and a check valve that permits only a flow of a hydraulic fluid from the tank-side hydraulic line to the bottom-side hydraulic line. The controller closes the meter-in control valve of the main control valve, sets the target pressure of the variable relief valve to a minimum value of a predetermined pressure range, and discharges a hydraulic fluid in the rod-side hydraulic line into the hydraulic fluid tank, in a case a work mode switching device that performs switching of a work mode of the work device switches the work mode to a float mode in which work is performed using an own weight of the work device.

### Advantages of the Invention

According to the present invention, it is possible to increase the operability at the time of float work while suppressing the deterioration in control performance and pressure loss.

### Brief Description of the Drawings

[FIG. 1] FIG. 1 is a side view schematically illustrating an overall configuration of a hydraulic excavator as an example of a work machine.
[FIG. 2] FIG. 2 is a diagram illustrating a hydraulic circuit system of a hydraulic excavator according to a first embodiment together with related components in an extracted manner.
[FIG. 3] FIG. 3 is a diagram schematically illustrating a configuration of a control system which controls an overall operation of the hydraulic excavator including the hydraulic circuit system according to the first embodiment.
[FIG. 4] FIG. 4 is a flowchart illustrating contents of processing of controlling a pilot-operated check valve included in a boom assist valve.
[FIG. 5] FIG. 5 is a flowchart illustrating contents of processing of controlling a variable relief valve included in the boom assist valve.
[FIG. 6] FIG. 6 is a flowchart illustrating contents of processing of setting a limit value of an operation pilot pressure, related to a boom lowering operation, for a boom-cylinder first directional control valve.
[FIG. 7] FIG. 7 is a flowchart illustrating contents of processing of setting a limit value of an operation pilot pressure, related to the boom lowering operation, for a boom-cylinder second directional control valve.
[FIG. 8] FIG. 8 is a diagram illustrating a computation function section which computes target values of operation pilot pressures (target pilot pressures) in boom raising and lowering operations.
[FIG. 9] FIG. 9 is a diagram illustrating a computation function section which computes a target current value of a control current to be output to each of solenoid proportional valves of a solenoid valve unit, for each of directional control valves related to the boom cylinder.
[FIG. 10] FIG. 10 is a view illustrating an operation example 1.
[FIG. 11] FIG. 11 is a view illustrating an operation example 2.
[FIG. 12] FIG. 12 is a diagram illustrating a hydraulic circuit system of a hydraulic excavator according to a second embodiment together with related components in an extracted manner.
[FIG. 13] FIG. 13 is a diagram schematically illustrating a configuration of a control system which controls an overall operation of the hydraulic excavator including the hydraulic circuit system according to the second embodiment.
[FIG. 14] FIG. 14 is a flowchart illustrating contents of processing of controlling a flow control valve connected to the boom-cylinder first directional control valve and a bypass cut valve connected to a hydraulic delivery line of a first pump.
[FIG. 15] FIG. 15 is a diagram illustrating a computation function section which computes a target current value of a control current to be output to each of solenoid proportional valves of a solenoid valve unit, for each of directional control valves related to the boom cylinder.

### Modes for Carrying Out the Invention

Hereinafter, embodiments of the present invention will be described with reference to the drawings. Note that, in the descriptions of the embodiments, a hydraulic excavator is illustrated as an example of a work machine, but the work machine is not limited to this, and the invention of the present application can be applied to another work machine having, for example, a work device provided rockably in an up-down direction.

### <First Embodiment>

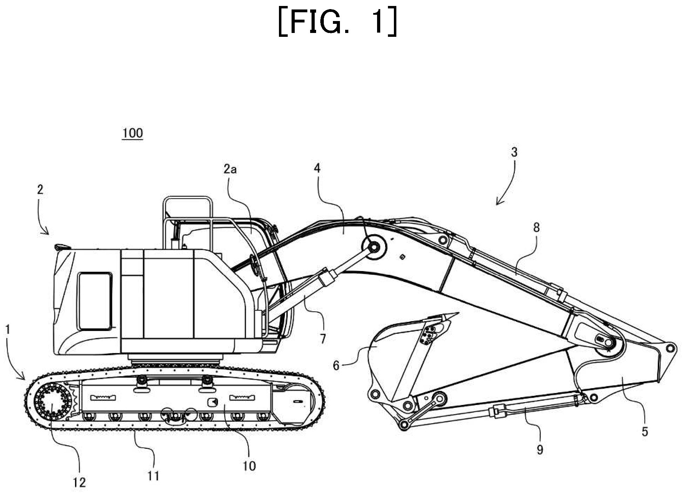

A description is now given of a first embodiment of the present invention with reference to FIG. 1 to FIG. 11.

FIG. 1 is a side view schematically illustrating an overall configuration of a hydraulic excavator as an example of a work machine according to the present embodiment.

As illustrated in FIG. 1, a hydraulic excavator 100 includes a lower travel structure 1, an upper swing structure 2 swingably mounted on an upper portion of the lower travel structure 1, and a front work device 3 provided to a front portion of the upper swing structure 2 rockably in an up-down direction. Note that, the lower travel structure 1 and the upper swing structure 2 form a machine main body that is a basic component of the hydraulic excavator 100.

The lower travel structure 1 generally includes a pair of left and right track frames 10, a pair of crawler belts 11 each wound around a respective one of the pair of track frames 10, and travel devices 12 each of which drives a respective one of the pair of the crawler belts 11. Each of the travel devices 12 includes, for example, a travel hydraulic motor, a speed reduction gear, and a sprocket, which are not illustrated. Note that FIG. 1 illustrates only one of the pair of left and right configurations of the lower travel structure 1 with reference characters, and illustration of the other configuration is omitted.

The front work device 3 is an articulated work device including a plurality of front members (a boom 4, an arm 5, and a bucket 6 (work tool)) coupled to one another. Each of the front members rotates in a vertical direction. A base end of the boom 4 is supported rotatably in the vertical direction by the front portion of the upper swing structure 2. One end of the arm 5 is supported rotatably in the vertical direction by an end portion (distal end) different from the base end of the boom 4. The bucket 6 is supported rotatably in the vertical direction by another end of the arm 5. Each of the front members of the front work device 3 is rotationally driven by a corresponding one of a boom cylinder 7, an arm cylinder 8, and a bucket cylinder 9. Note that, in the present embodiment, there is described an example in which the bucket 6 is attached to a distal end of the front work device 3, but another attachment may instead be attached thereto.

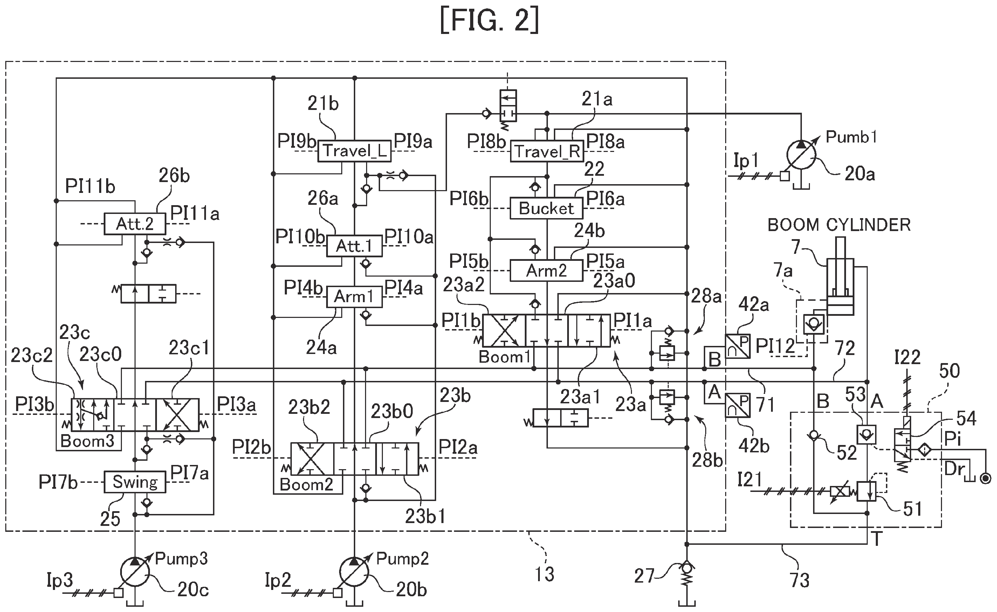

The upper swing structure 2 is disposed swingably with respect to the lower travel structure 1 and is driven to swing by a swing hydraulic motor (not illustrated). In the upper swing structure 2, there are disposed, for example, an engine (not illustrated) as a prime mover, various hydraulic pumps (see FIG. 2) driven by the engine, and a control valve 13 (see FIG. 2) which controls directions and flow rates of hydraulic fluids (hydraulic working fluids) delivered from the hydraulic pumps and supplied to hydraulic actuators including the hydraulic cylinders 7, 8, and 9, hydraulic motors, and the like, thereby forming a hydraulic circuit system.

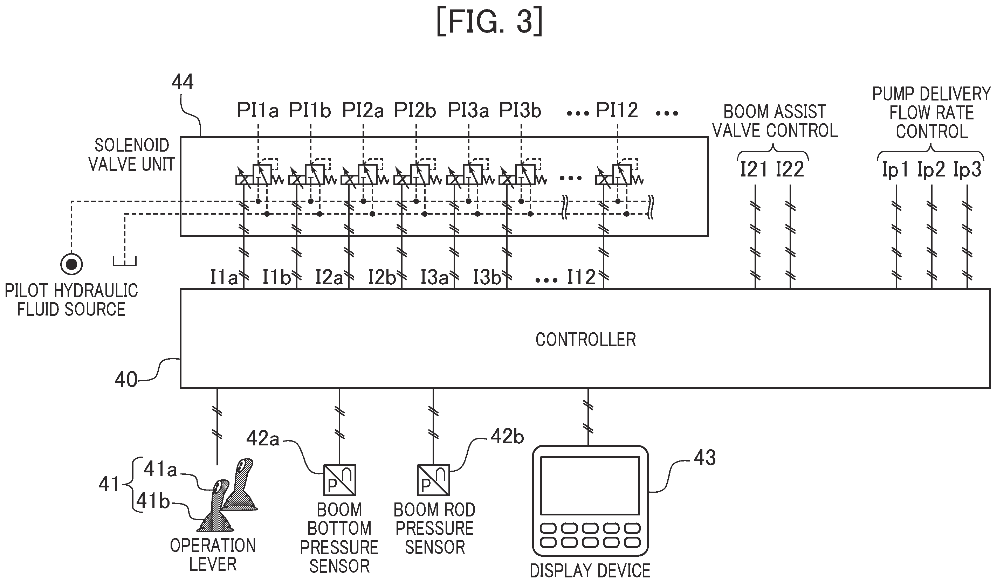

A cabin 2a into which an operator gets to operate the hydraulic excavator 100 is disposed on a front portion of the upper swing structure 2 on a side of the portion supporting the front work device 3. In the cabin 2a, there are disposed, for example, an operation device 41 (see FIG. 3) by which an operator who has gotten into the cabin 2a performs a drive operation of the front work device 3, a travel operation of the lower travel structure 1, a swing operation of the upper swing structure 2, and other operations and a display device 43 (see FIG. 3) which presents various types of information to the operator and receives input of various settings from the operator.

The operation device 41 outputs an operation signal according to an operation amount input by the operator, and includes operation levers 41a each of which is operated to incline by the operator and operation amount sensors 41b each of which senses an inclination amount of the corresponding operation lever 41a and outputs the inclination amount as the operation signal.

To the display device 43, a setting of a normal mode or a boom-assist mode (press mode or float mode) as a work mode of the front work device 3, a setting of a pressing force adjustment value in the press mode of the boom assist mode, and the like are input as setting information by the operator. That is, the display device 43 has a function of a work mode switching device.

FIG. 2 is a diagram illustrating a hydraulic circuit system of the hydraulic excavator according to the present embodiment together with related components in an extracted manner. Moreover, FIG. 3 is a diagram schematically illustrating a configuration of a control system which controls an overall operation of the hydraulic excavator including the hydraulic circuit system according to the present embodiment. Note that, in FIG. 2, for the sake of simple illustration and description, the boom cylinder out of a plurality of hydraulic actuators and components related to the boom cylinder are illustrated as a typical example, and illustrations and descriptions of other hydraulic actuators are appropriately omitted.

In FIG. 2, the hydraulic circuit system includes variable displacement hydraulic pumps (a first pump 20a, a second pump 20b, and a third pump 20c) driven by the prime mover, a control valve 13 (main control valve) that controls flow rates and directions of hydraulic fluids supplied from the hydraulic pumps 20a, 20b, and 20c to the hydraulic actuators including the hydraulic cylinders 7, 8, and 9, hydraulic motors 12, and the like, and a boom assist valve 50 (additional control valve) provided on a hydraulic line which branches toward a hydraulic fluid tank (hydraulic working fluid tank) side from hydraulic lines (a bottom hydraulic line 71 and a rod hydraulic line 72) connecting the control valve 13 and the hydraulic actuator (boom cylinder 7 herein) to each other. Moreover, on the bottom hydraulic line 71 of the boom cylinder 7, there is provided a pilot-operated check valve 7a (boom holding valve) which switches, according to a control pressure from the control system, between permission and interruption of the flow of a hydraulic fluid from the rod hydraulic line 72 to a variable relief valve 51. Tilting angles (pump delivery flow rates) of the first pump 20a, the second pump 20b, and the third pump 20c are controlled according to control currents Ip1, Ip2, and Ip3, respectively, output from the control system.

The control valve 13 includes a right-travel-hydraulic-motor directional control valve 21a (Travel_R), a bucket-cylinder directional control valve 22 (Bucket), an arm-cylinder second directional control valve 24b (Arm2), and a boom-cylinder first directional control valve 23a (Boom1), which are connected to a hydraulic delivery line of the first pump 20a (Pump1), a left-travel-hydraulic-motor directional control valve 21b (Travel_L), an attachment first directional control valve 26a (Att.1), an arm-cylinder first directional control valve 24a (Arm1), and a boom-cylinder second directional control valve 23b (Boom2), which are connected to a hydraulic delivery line of the second pump 20b, and an attachment second directional control valve 26b (Att.2), a boom-cylinder third directional control valve 23c (Boom3), and a swing-hydraulic-motor directional control valve 25 (Swing), which are connected to a hydraulic delivery line of the third pump 20c.

Each of the directional control valves 21a, 21b, 22, 23a, 23b, 23c, 24a, 24b, 25, 26a, and 26b is driven toward both directions by a pair of operation pilot pressures. For example, the boom-cylinder first directional control valve 23a (Boom1) is driven by operation pilot pressures PI1a and PI1b, the boom-cylinder second directional control valve 23b (Boom2) is driven by operation pilot pressures PI2a and PI2b, and the boom-cylinder third directional control valve 23c (Boom3) is driven by operation pilot pressures PI3a and PI3b. Similarly, the arm-cylinder first directional control valve 24a (Arm1) is driven by operation pilot pressures PI4a and PI4b, the arm-cylinder second directional control valve 24b (Arm2) is driven by operation pilot pressures PI5a and PI5b, the bucket-cylinder directional control valve 22 (Bucket) is driven by operation pilot pressures PI6a and PI6b, the swing-hydraulic-motor directional control valve 25 (Swing) is driven by operation pilot pressures PI7a and PI7b, the right-travel-hydraulic-motor directional control valve 21a (Travel_R) is driven by operation pilot pressures PI8a and PI8b, the left-travel-hydraulic-motor directional control valve 21b (Travel_L) is driven by operation pilot pressures PI9a and PI9b, the attachment first directional control valve 26a (Att.1) is driven by operation pilot pressures PI10a and PI10b, and the attachment second directional control valve 26b (Att.2) is driven by operation pilot pressures PI11a and PI11b.

A detailed description is now given of an operation of a hydraulic circuit related to the boom cylinder 7 which drives the boom 4.

The boom-cylinder first directional control valve 23a moves to a raising-side position 23a1 in response to input of the operation pilot pressure PI1a (Boom1-raising-operation pilot pressure), thereby opening a throttle opening between the hydraulic delivery line of the first pump 20a and the bottom hydraulic line 71 of the boom cylinder 7 and opening a throttle opening between the rod hydraulic line 72 and a hydraulic tank return line (tank hydraulic line 73).

In addition, the boom-cylinder first directional control valve 23a moves to a lowering-side position 23a2 in response to input of the operation pilot pressure PI1b (Boom1-lowering-operation pilot pressure), thereby opening a throttle opening between the hydraulic delivery line of the first pump 20a and the rod hydraulic line 72 of the boom cylinder 7 and opening a throttle opening between the bottom hydraulic line 71 and the hydraulic tank return line (tank hydraulic line 73).

The boom-cylinder second directional control valve 23b moves to a raising-side position 23b1 in response to input of the operation pilot pressure PI2a (boom2-raising-operation pilot pressure), thereby opening a throttle opening between the hydraulic delivery line of the second pump 20b and the bottom hydraulic line 71 of the boom cylinder 7 and opening a throttle opening between the rod hydraulic line 72 and the hydraulic tank return line (tank hydraulic line 73).

Further, the boom-cylinder second directional control valve 23b moves to a lowering-side position 23b2 in response to input of the operation pilot pressure PI2b (boom2-lowering-operation pilot pressure), thereby opening a throttle opening between the hydraulic delivery line of the second pump 20b and the rod hydraulic line 72 of the boom cylinder 7 and opening a throttle opening between the bottom hydraulic line 71 and the hydraulic tank return line (tank hydraulic line 73).

The boom-cylinder third directional control valve 23c moves to a raising-side position 23c1 in response to input of the operation pilot pressure PI3a (Boom3-raising-operation pilot pressure), thereby opening a throttle opening between the hydraulic delivery line of the third pump 20c and the bottom hydraulic line 71 of the boom cylinder 7 and opening a throttle opening between the rod hydraulic line 72 and the hydraulic tank return line (tank hydraulic line 73).

Moreover, the boom-cylinder third directional control valve 23c moves to a lowering-side position 23c2 in response to input of the operation pilot pressure PI3b (Boom3-lowering-operation pilot pressure), thereby opening a throttle opening between the bottom hydraulic line 71 of the boom cylinder 7 and the hydraulic tank return line (tank hydraulic line 73) and opening a throttle opening, via a hollow hydraulic line and a check valve, between the bottom hydraulic line 71 and the rod hydraulic line 72 to supply (regenerate) a hydraulic fluid in the bottom hydraulic line 71 to the rod hydraulic line 72. Such a hydraulic line that connects, via the hollow hydraulic line and the check valve, the bottom hydraulic line 71 and the rod hydraulic line 72 to each other is referred to as a hydraulic internal regeneration line. Note that the boom-cylinder third directional control valve 23c does not include, at the lowering-side position 23c2, a circuit which establishes connection between the hydraulic delivery line of the third pump 20c and the rod hydraulic line 72. This boom-cylinder third directional control valve 23c or the lowering-side position 23c2 forms a regeneration control valve.

On the bottom hydraulic line 71 and the rod hydraulic line 72 of the boom cylinder 7 of the control valve 13, there are provided over-load relief valves 28a and 28b each having a makeup function, a boom bottom pressure sensor 42a which senses a pressure in the bottom hydraulic line 71, and a boom rod pressure sensor 42b which senses a pressure in the rod hydraulic line 72. The over-load relief valves 28a and 28b are provided to prevent damage to the hydraulic cylinders including the boom cylinder 7 and structures of the front work device 3 which is caused by overload in a case an external force is applied to the boom cylinder 7.

The boom assist valve 50 (additional control valve) is provided on the hydraulic line which branches toward the hydraulic fluid tank (hydraulic working fluid tank) side from the bottom hydraulic line 71 and the rod hydraulic line 72 connecting the control valve 13 and the boom cylinder 7 to each other, and includes the variable relief valve 51, a check valve 52, a pilot-operated check valve 53, and a solenoid selector valve 54.

The variable relief valve 51 is provided between the rod hydraulic line 72 and the hydraulic line (tank hydraulic line 73) connected to the hydraulic fluid tank, and controls a pressure in the rod hydraulic line 72 such that the pressure is equal to or lower than a predetermined relief pressure (target pressure). The variable relief valve 51 can adjust the relief pressure according to a control current I21. Note that an upper limit value of the relief pressure which can be set to the variable relief valve 51 is a pressure equivalent to or lower than that of the over-load relief valve 28a or 28b, and a lower limit value thereof is substantially 0 (zero) Mpa.

The check valve 52 is provided between the bottom hydraulic line 71 and the tank hydraulic line 73, and permits only the flow of a hydraulic fluid from the tank hydraulic line 73 to the bottom hydraulic line 71 but interrupts the flow of a hydraulic fluid from the bottom hydraulic line 71 to the tank hydraulic line 73.

The pilot-operated check valve 53 is provided between the rod hydraulic line 72 and the variable relief valve 51 and switches between permission and interruption of the flow of a hydraulic fluid from the rod hydraulic line 72 to the variable relief valve 51 according to a control pressure from the solenoid selector valve 54. The solenoid selector valve 54 adjusts the control pressure for the pilot-operated check valve 53 according to a control current I22. In a case a position of the solenoid selector valve 54 is switched to a permission side (an upper side of FIG. 2) according to the control current I22, a pilot pressure Pi is transmitted to the pilot-operated check valve 53, and the pilot-operated check valve 53 is thus switched to a state in which the flow of the hydraulic fluid from the rod hydraulic line 72 to the variable relief valve 51 is permitted. On the other side, in a case the position of the solenoid selector valve 54 is switched to an interruption side (a lower side of FIG. 2) according to the control current I22, a tank pressure Dr (substantially 0 (zero) Mpa) is transmitted to the pilot-operated check valve 53, and the pilot-operated check valve 53 is thus switched to a state in which the flow of the hydraulic fluid from the rod hydraulic line 72 to the variable relief valve 51 is interrupted.

As illustrated in FIG. 3, the control system includes a controller 40, a solenoid valve unit 44, the operation device 41 and the display device 43 which are provided in the cabin 2a, the boom bottom pressure sensor 42a provided on the bottom hydraulic line 71, the boom rod pressure sensor 42b provided on the rod hydraulic line 72, and the like.

The information (setting information) input to and set on the display device 43 by an operator includes information regarding the work mode of the front work device 3. The work mode to be set includes the normal mode and the boom-assist mode. In a case the boom-assist mode is set, either the press mode or the float mode is selectively set. Moreover, in the press mode of the boom assist mode, a pressing force adjustment value is set as needed. Note that, as a pressing force setting value, there may be used a standard value set in advance, any value input by an operator, or a value selected from a plurality of candidate values prepared in advance.

The controller 40 generates, on the basis of an operation signal from the operation device 41, sensing signals from the sensors 42a and 42b, setting information from the display device 43, and the like, control signals I1a, I1b, ..., I12, ... which are to be output to the solenoid valve unit 44, the control currents I21 and I22 which are to be output to the variable relief valve 51 and the solenoid selector valve 54 of the boom assist valve 50, and the control currents Ip1, Ip2, and Ip3 which are to be output to the hydraulic pumps 20a, 20b, and 20c.

The solenoid valve unit 44 includes a plurality of proportional solenoid valves corresponding to the respective directional control valves 21a, 21b, 22, 23a, 23b, 23c, 24a, 24b, 25, 26a, and 26b of the control valve 13. The solenoid valve unit 44 drives, according to a control command generated by the controller 40 on the basis of an operation performed on the operation device 41, each of the proportional solenoid valves of the solenoid valve unit 44 to generate each of the operation pilot pressures PI1a, PI1b, ..., PI12, ..., and uses the generated operation pilot pressure to drive a corresponding one of the directional control valves of the control valve 13, thereby operating each of the hydraulic actuators 7, 8, 9 forming the front work device 3, for example.

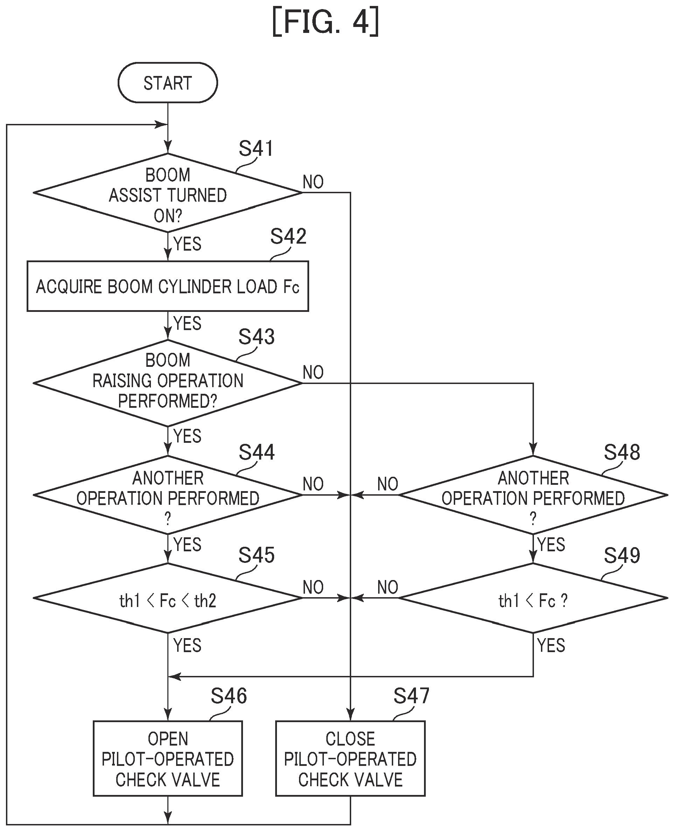

FIG. 4 is a flowchart illustrating contents of processing of controlling the pilot-operated check valve included in the boom assist valve.

In FIG. 4, the controller 40 first acquires setting information from the display device 43 and determines whether or not a boom assist function is set valid (Step S41).

In a case a determination result in Step S41 is YES, that is, in a case the boom assist function is set valid (in a case of the boom assist mode), the controller 40 subsequently acquires a boom cylinder load Fc (Step S42). With use of a value p_b sensed by the boom bottom pressure sensor 42a, a value p_r sensed by the boom rod pressure sensor 42b, a bottom-side-hydraulic-line cross-sectional area Sb of the boom cylinder 7, and a rod-side hydraulic-line cross-sectional area Sr of the boom cylinder 7, the boom cylinder load Fc can be calculated as given by Fc = p_b × Sb - p_r × Sr. For example, in a case the boom cylinder load Fc satisfies a relation (Fc > 0), this means a state in which a load is applied to support the boom 4 moving downward, and in a case the boom cylinder load Fc satisfies a relation (Fc ≤ 0), that means a state in which a load is applied to impede a force for raising the boom 4 (for example, in a case an excavation reaction force is received, or in a case the front work device 3 performs jacking up with the bucket 6 brought in contact with the ground).

After that, the controller 40 determines whether or not a boom raising operation is being performed (Step S43). In the determination in Step S43, in a case the boom raising operation by the operation device 41 is turned ON (for example, in a case a boom raising operation amount is equal to or more than 10%), the controller 40 determines that the boom raising operation is being performed.

In a case a determination result in Step S43 is YES, the controller 40 subsequently determines whether or not another operation other than the boom raising operation is being performed (Step S44). In the determination in Step S44, in a case any one of operations (for example, an arm operation, a bucket operation, and the like) other than the boom raising operation by the operation device 41 is turned ON (for example, in a case an absolute value of any one of operation amounts is equal to or more than 10%), the controller 40 determines that an operation other than the boom raising operation is being performed.

In a case a determination result in Step S44 is YES, the controller 40 subsequently determines whether or not the boom cylinder load Fc is higher than a first cylinder load threshold value th1 but lower than a second cylinder load threshold value th2 (Step S45). The first cylinder load threshold value th1 is a threshold value used for determining whether or not a machine body is in a jacked-up state (in a state in which the bucket 6 is pressed against the ground and one end of the lower travel structure 1 is thereby separated from the ground). For example, in a case a relation (th1 < Fc) is satisfied, that indicates that the machine body is in the jacked-up state. Moreover, the second cylinder load threshold value th2 is a threshold value used for determining whether or not the bucket 6 is in a ground contact state (in a state in which no load is substantially applied to the boom cylinder 7). For example, in a case a relation (Fc < th2) is satisfied, that indicates that the bucket 6 is in the ground contact state.

In a case a determination result in Step S45 is YES, the controller 40 outputs a control current I22 for opening the pilot-operated check valve 53 to the solenoid selector valve 54 (Step S46) and returns to the processing in Step S41.

On the other hand, in a case the determination result in Step S41 is NO, that is, in a case the boom assist function is set invalid (in a case of the normal mode), the controller 40 outputs a control current I22 for closing the pilot-operated check valve 53 (for example, a control current having a sufficiently small current value or 0 (zero)) to the solenoid selector valve 54 (Step S47) and returns to the processing in Step S41.

Further, in a case the determination result in Step S43 is NO, that is, in a case determining that the boom raising operation is not being performed, the controller 40 subsequently determines whether or not another operation other than the boom raising operation is being performed (Step S48). In the determination in Step S48, in a case any one of operations (for example, the arm operation, the bucket operation, and the like) other than the boom raising operation by the operation device 41 is turned ON (for example, in a case an absolute value of any one of operation amounts is equal to or more than 10%), the controller 40 determines that an operation other than the boom raising operation is being performed.

In a case a determination result in Step S48 is YES, the controller 40 subsequently determines whether or not the boom cylinder load Fc is higher than the first cylinder load threshold value th1 (Step S49).

In a case a determination result in Step S49 is YES, the controller 40 outputs the control current I22 for opening the pilot-operated check valve 53 to the solenoid selector valve 54 (Step S46) and returns to the processing in Step S41.

On the other hand, in a case any one of the determination results in Step S44, S45, S48, and S49 is NO, the controller 40 outputs the control current I22 for closing the pilot-operated check valve 53 (for example, a control current having a sufficiently small current value or 0 (zero)) to the solenoid selector valve 54 (Step S47) and returns to the processing in Step S41.

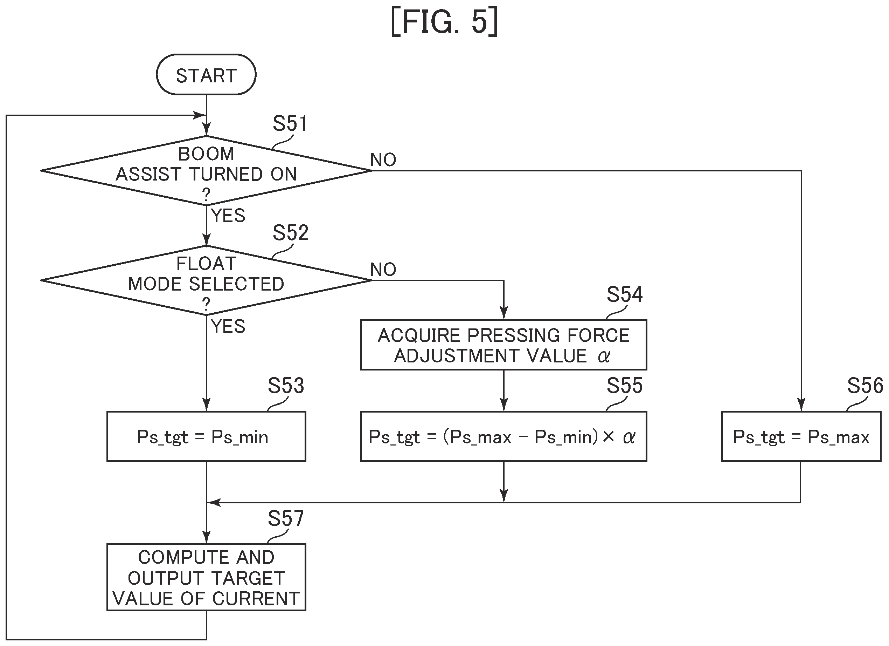

FIG. 5 is a flowchart illustrating contents of processing of controlling the variable relief valve included in the boom assist valve.

In FIG. 5, the controller 40 first acquires setting information from the display device 43 and determines whether or not the boom assist function is set valid (Step S51).

In a case a determination result in Step S51 is YES, that is, in a case the boom assist function is set valid (in the case of the boom assist mode), the controller 40 subsequently determines whether or not the float mode is further selected in the boom assist mode (Step S52).

In a case a determination result in Step S52 is YES, that is, in a case the float mode is selected, the controller 40 subsequently sets a target pressure Ps_tgt of the variable relief valve 51 to a minimum value Ps_min (for example, 0.5 MPa) of a predetermined settable pressure range (Step S53), computes a control current I21 corresponding to the set target pressure Ps_tgt, outputs the control current I21 to the variable relief valve 51 (Step S57), and returns to the processing in Step S51.

On the other hand, in a case the determination result in Step S51 is NO, that is, in a case the boom assist function is set invalid (in the case of the normal mode), the controller 40 sets the target pressure Ps_tgt of the variable relief valve 51 to a maximum value Ps_max (for example, 20 MPa) of the predetermined settable pressure range (Step S56), computes a control current I21 corresponding to the set target pressure Ps_tgt, outputs the control current I21 to the variable relief valve 51 (Step S57), and returns to the processing in Step S51.

Further, in a case the determination result in Step S52 is NO, that is, in a case the press mode is selected, the controller 40 subsequently acquires a pressing force adjustment value α (for example, 0% to 100%) from the display device 43 (Step S54), sets the target pressure Ps_tgt of the variable relief valve 51 to a value (for example, (Ps_max - Ps_min) × α) corresponding to the pressing force adjustment value α (Step S55), computes a control current I21 corresponding to the set target pressure Ps_tgt, output the control current I21 to the variable relief valve 51 (Step S57), and returns to the processing in Step S51.

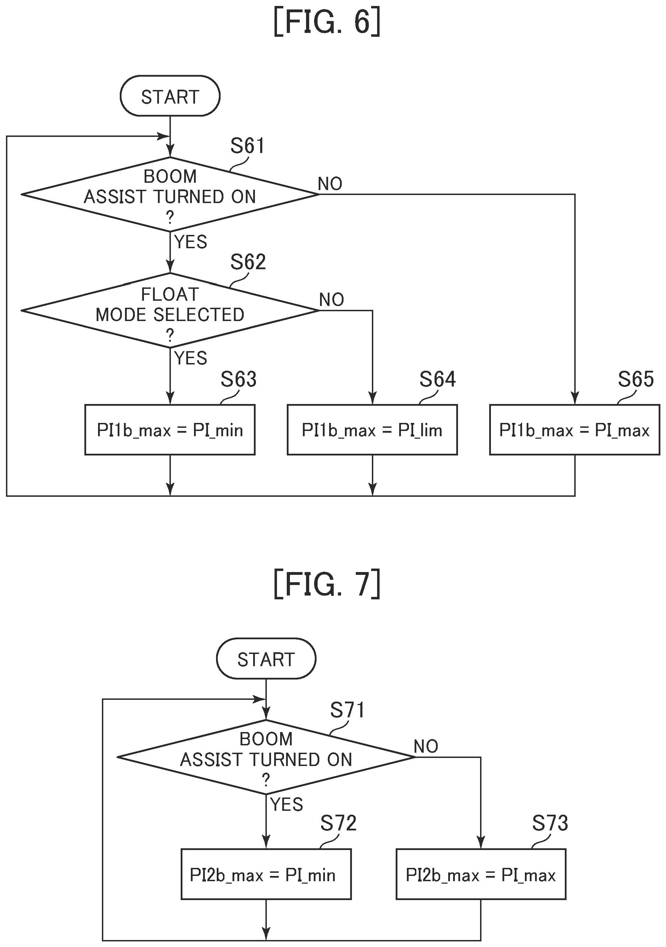

FIG. 6 is a flowchart illustrating contents of processing of setting a limit value of an operation pilot pressure, related to a boom lowering operation, for the boom-cylinder first directional control valve. The processing of setting a limit value is processing of setting an upper limit value of the operation pilot pressure PI1b related to the boom lowering operation (Boom1-lowering-operation pilot pressure) for the boom-cylinder first directional control valve 23a.

In FIG. 6, the controller 40 first acquires setting information from the display device 43 and determines whether or not the boom assist function is set valid (Step S61).

In a case a determination result in Step S61 is YES, that is, in a case the boom assist function is set valid (in the case of the boom assist mode), the controller 40 subsequently determines whether or not the float mode is further selected in the boom assist mode (Step S62).

In a case a determination result in Step S62 is YES, that is, in a case the float mode is selected, the controller 40 subsequently sets a limit value PI1b_max of the operation pilot pressure PI1b related to the boom lowering operation for the boom-cylinder first directional control valve 23a to a minimum value PI_min (for example, 0 (zero) MPs) of a predetermined settable pressure range (Step S63) and returns to the processing in Step S61.

On the other hand, in a case the determination result in Step S61 is NO, that is, in a case the boom assist function is set invalid (in the case of the normal mode), the controller 40 sets the limit value PI1b_max of the operation pilot pressure PI1b related to the boom lowering operation for the boom-cylinder first directional control valve 23a to a maximum value PI_max of the predetermined settable pressure range (Step S65) and returns to the processing in Step S61. Here, the maximum value PI_max is a value (which depends on an opening characteristic of the boom-cylinder first directional control valve 23a and is, for example, 1.5 MPa) at which a minimum hydraulic fluid can flow from the boom-cylinder first directional control valve 23a into the rod hydraulic line 72.

Further, in a case the determination result in Step S62 is NO, that is, in a case the press mode is selected, the controller 40 subsequently sets the limit value PI1b_max of the operation pilot pressure PI1b related to the boom lowering operation for the boom-cylinder first directional control valve 23a to an upper limit value PI_lim (for example, 4 MPa) of a pilot system (Step S64) and returns to the processing in Step S61.

FIG. 7 is a flowchart illustrating contents of processing of setting a limit value of an operation pilot pressure, related to the boom lowering operation, for the boom-cylinder second directional control valve. The processing of setting a limit value is processing of setting an upper limit value of the operation pilot pressure Pi2b related to the boom lowering operation (Boom2-lowering-operation pilot pressure) for the boom-cylinder second directional control valve 23b.

In FIG. 7, the controller 40 first acquires setting information from the display device 43 and determines whether or not the boom assist function is set valid (Step S71).

In a case a determination result in Step S71 is YES, that is, in a case the boom assist function is set valid (in the case of the boom assist mode, that is, in the case of the float mode or the press mode), the controller 40 sets a limit value PI2b_max of the operation pilot pressure PI2b related to the boom lowering operation for the boom-cylinder second directional control valve 23b to the minimum value PI_min (for example, 0 (zero) MPs) of the predetermined settable pressure range (Step S72) and returns to the processing in Step S61.

On the other hand, in a case the determination result in Step S71 is NO, that is, in a case the boom assist function is set invalid (in the case of the normal mode), the controller 40 sets the limit value PI2b_max of the operation pilot pressure PI2b related to the boom lowering operation for the boom-cylinder second directional control valve 23b to the upper limit value PI_lim (for example, 4 MPa) of the pilot system (Step S73) and returns to the processing in Step S71.

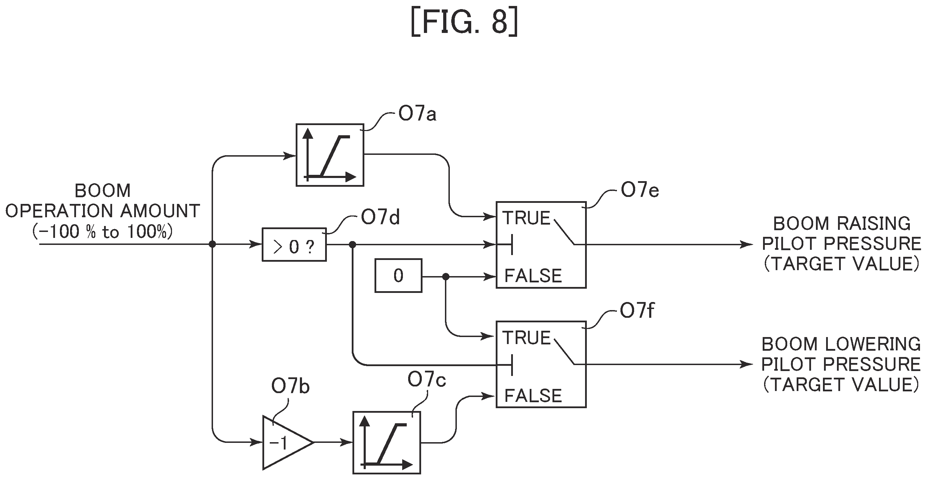

FIG. 8 is a diagram illustrating a computation function section which computes target values of operation pilot pressures (target pilot pressures) in the boom raising and lowering operations.

As illustrated in FIG. 8, the computation function section of the controller 40 acquires a boom operation amount (which is expressed in a range of -100% to 100%, for example, and indicates that, in a range of 0% to 100%, a raising operation amount is larger as the numerical value is larger, and in a range of -100% to 0%, a lowering operation amount is larger as the numerical value is smaller). Then, the computation function section of the controller 40 converts, for the boom raising operation, the boom operation amount into an operation pilot pressure via a predetermined table computation section O7a, while the computation function section inverts, for the boom lowering operation, the sign of the boom operation amount in an inversion section O7b and then converts the inverted boom operation amount into an operation pilot pressure via a predetermined table computation section O7c. After that, according to a result of determination (TRUE or RALSE) made by a determination section O7d as to whether or not the value of the boom operation amount is positive, the converted operation pilot pressure is output, as the target value of a boom raising pilot pressure or a boom lowering target pilot pressure, from a selection section O7e or O7f. Note that 0 (zero) is output as the target value of a boom raising pilot pressure or a boom lowering target pilot pressure which is not selected in the selection section O7e or O7f according to the result of determination made by the determination section O7d.

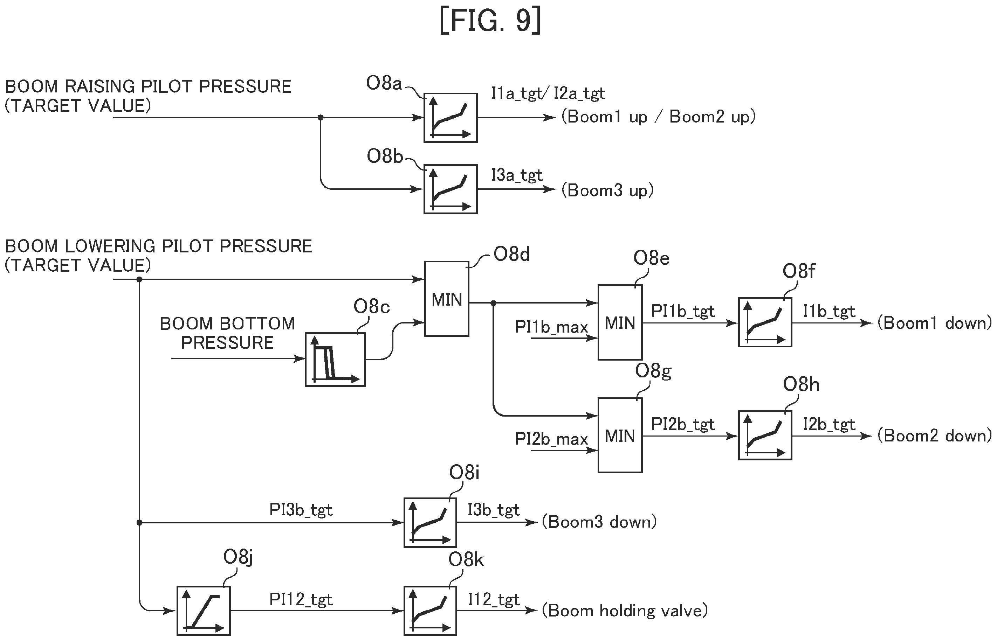

FIG. 9 is a diagram illustrating a computation function section which computes a target current value of a control current to be output to each of the solenoid proportional valves of the solenoid valve unit, for each of the directional control valves related to the boom cylinder.

As illustrated in FIG. 9, the computation function section of the controller 40 converts, for the boom raising operation, the target values (see FIG. 8) of boom raising pilot pressures (operation pilot pressures) into current values via table computation sections O8a and O8b and outputs the current values as target current values I1a_tgt, I2a_tgt, and I3a_tgt of control currents related to the boom raising operation for the directional control valves 23a, 23b, and 23c, to the solenoid valve unit 44.

Moreover, the computation function section of the controller 40 converts, for the boom lowering operation, a value sensed by the boom bottom pressure sensor 42a into a limit value of operation pilot pressures for the directional control valves 23a and 23b via a table computation section O8c and outputs the limit value to a minimum selection section O8d. Specifically, the computation function section computes a limit value in such a manner that the limit value is 0 (zero) for a boom bottom pressure in the air and is the maximum pressure (for example, 4 MPa) of the pilot system for a boom bottom pressure at the time in a case the bucket comes in contact with the ground. Note that, in the table computation section O8c, in order to avoid generation of control hunting caused by a pressure variation of the boom bottom pressure, a computation table may have a hysteresis function.

The minimum selection section O8d selects, out of the target value of a boom lowering pilot pressure (operation pilot pressure) and the limit value of the boom lowering target pilot pressure computed in the table computation section O8c, the minimum value and outputs the minimum value to minimum selection sections O8e and O8g.

The minimum selection section O8e selects, out of the output from the minimum selection section O8d and the limit value PI1b_max (see FIG. 6) of the operation pilot pressure PI1b related to the boom lowering operation for the boom-cylinder first directional control valve 23a, the minimum value, converts the minimum value into a current value via a table computation section O8f, and outputs the current value as a target current value I1b_tgt of the control current related to the boom lowering operation for the directional control valve 23a, to the solenoid valve unit 44.

Similarly, the minimum selection section O8g selects, out of the output from the minimum selection section O8d and the limit value PI2b_max (see FIG. 7) of the operation pilot pressure PI2b related to the boom lowering operation for the boom-cylinder second directional control valve 23b, the minimum value, converts the minimum value into a current value via a table computation section O8h, and outputs the current value as a target current value I2b_tgt of the control current related to the boom lowering operation for the directional control valve 23b, to the solenoid valve unit 44.

Further, the computation function section of the controller 40 converts the target value (see FIG. 9) of the boom lowering pilot pressure (operation pilot pressure) into a current value via a table computation sections O8i and outputs the current value as a target current value I3b_tgt of the control current related to the boom lowering operation for the directional control valve 23c, to the solenoid valve unit 44.

Moreover, the computation function section of the controller 40 converts the target value (see FIG. 9) of the boom lowering pilot pressure (operation pilot pressure) into a control pressure target value of the boom holding valve (pilot-operated check valve 7a) via a table computation sections O8j, further converts the control pressure target value into a current value via a table computation section O8k, and outputs the current value as a target current value I12_tgt of the control current related to the boom holding valve, to the solenoid valve unit 44.

A description is now given of an operation in the present embodiment configured as described above.

### (Operation Example 1)

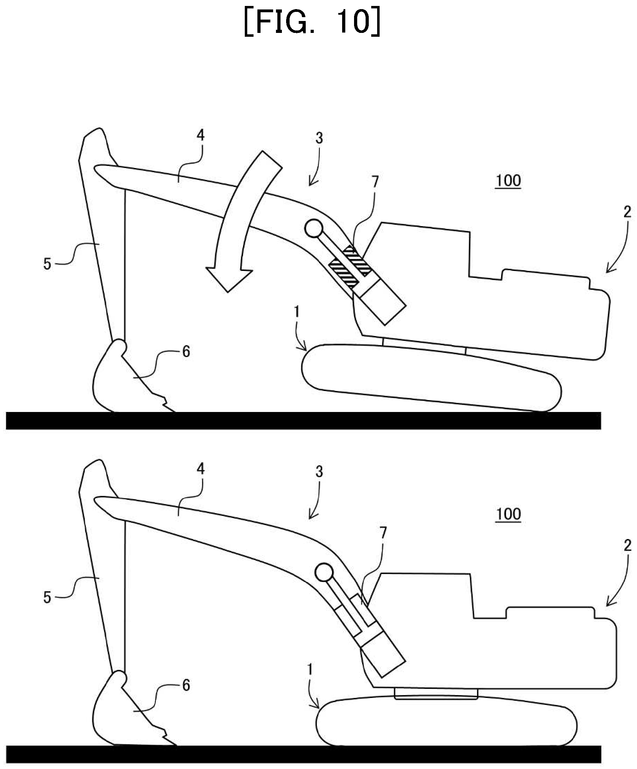

First, as one of operation examples, there is now described an example in which the operation device 41 is operated to perform boom lowering in the air and the lowering operation is continued also after the bucket comes in contact with the ground. FIG. 10 is a view illustrating an operation example 1.

In a case the operation device 41 is operated to lower the boom in the air, a boom bottom pressure sensor value takes a high value, and hence, the Boom1-lowering-operation pilot pressure and the Boom2-lowering-operation pilot pressure are each limited to a value of approximately 0 (zero) (see the table computation section 08c of FIG. 9). At this time, the supply of a hydraulic fluid from the first pump 20a and the second pump 20b to the rod hydraulic line 72 of the boom cylinder 7 is interrupted, and there is no circuit from the hydraulic delivery line of the third pump 20c to the rod hydraulic line 72 of the boom cylinder 7. Hence, a hydraulic fluid from the bottom hydraulic line 71 is supplied to the rod hydraulic line 72 of the boom cylinder 7 via the hydraulic internal regeneration line of the directional control valve 23c. Since a pump delivery fluid is not used and a hydraulic fluid from a boom bottom which is normally discharged into the tank while causing pressure loss is regenerated, the boom lowering operation can be performed in an energy-saving manner.

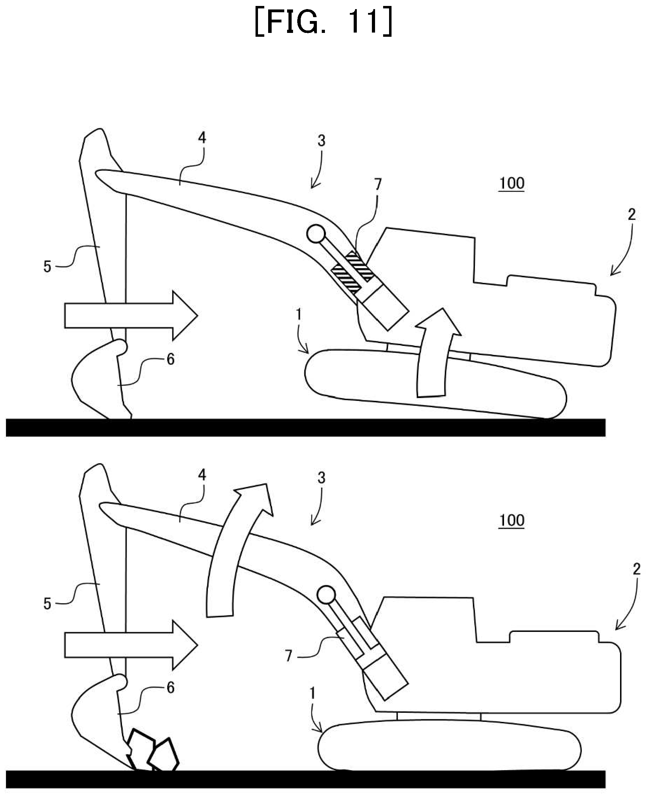

In a case the boom 4 is continuously lowered and the bucket 6 comes in contact with the ground, a boom bottom pressure decreases, and no limit is imposed on the Boom1-lowering-operation pilot pressure and the Boom2-lowering-operation pilot pressure (see the table computation section O8c of FIG. 9). In a case the boom assist function is invalid (normal mode), a Boom1 lowering pilot pressure limit value and a Boom2 lowering pilot pressure limit value are each the maximum pilot pressure (see FIG. 6 and FIG. 7). Thus, as the Booml-lowering-operation pilot pressure and the Boom2-lowering-operation pilot pressure, a boom lowering operation pilot pressure target value is output (see FIG. 8), and a hydraulic fluid is supplied from the first pump 20a and the second pump 20b to the rod hydraulic line 72 of the boom cylinder 7. Moreover, at this time, that is, in a case it is determined that the work mode is switched to the normal mode and that the front work device 3 (specifically the bucket 6) is in contact with the ground, the boom-cylinder first directional control valve 23a and the boom-cylinder second directional control valve 23b are moved to the lowering-side positions 23a2 and 23b2, respectively, according to output of operation signals from the operation device 41 (that is, meter-in control valves of the main control valve are opened according to the output of the operation signals from the operation device 41; see the function sections O8c to O8h of FIG. 9 and the like). As a result, the bucket 6 is pressed against the ground, and in a case the lowering operation is continued, front ends of the crawler belts of the lower travel structure 1 are lifted, that is, the machine body is in the jacked-up state (see FIG. 11). As described above, application of a pressing force similar to that of a conventional hydraulic excavator is achieved after the bucket comes in contact with the ground.

While a conventional technology uses a lowering-side second position of a boom directional control valve to supply a hydraulic fluid from a tank, the present invention uses a directional control valve having three positions, that is, a neutral position, a raising position, and a lowering position, thereby taking a large stroke amount for a change in opening. Accordingly, pressure loss is reduced by increasing the maximum opening, or excellent controllability is exhibited by making the change in opening gentle.

In the boom float mode, in a case the bucket 6 is disposed on the ground, the Boom1-lowering-operation pilot pressure and the Boom2-lowering-operation pilot pressure are limited by a limit value PI_min (see FIG. 6 and FIG. 7), and a pump delivery fluid is not supplied to the boom rod hydraulic line also after the bucket comes in contact with the ground. As a result, the pressing force of the bucket is limited to a force substantially equivalent to the own weight of the front work device.

In the boom press mode, in a case the bucket 6 is disposed on the ground, the Boom1-lowering-operation pilot pressure and the Boom2-lowering-operation pilot pressure are limited by a limit value PI_lim (see FIG. 6 and FIG. 7). As a result, a small amount of a delivery fluid from the first pump 20a and the second pump 20b is supplied to the rod hydraulic line 72 of the boom cylinder 7. Further, in the flow of control of the pilot-operated check valve 53 (see FIG. 4), the flow transitions to the processing in Step S49 according to an operation condition. In this instance, the cylinder load Fc is substantially equivalent to a load at which the jack up does not occur, and hence is higher than the first cylinder load threshold value th1, and the pilot-operated check valve 53 is consequently opened. Moreover, in the flow of control of the variable relief valve (see FIG. 5), since the work mode is the press mode, the flow transitions to the processing in Steps S54 and S55, and the variable relief valve 51 is set at a pressing force corresponding to a pressing force adjustment parameter set on the display device 43. The small amount of the delivery fluid from the first pump 20a and the second pump 20b passes through the pilot-operated check valve 53 and is maintained at a constant pressure by the variable relief valve 51. Hence, a force with which the bucket 6 is pressed against the ground can be set by an operator, and a stable force can be maintained independently of a magnitude of the boom lowering operation. With this configuration, also in a case a breaker is mounted in place of the bucket 6, for example, it is possible to adjust a pressing force of a chisel to be substantially equivalent to a pressing force at which the jack up does not occur, according to a parameter. That is, it is possible to eliminate such work that requires an operator to appropriately adjust a boom operation to thereby adjust the pressing force of the chisel, which leads to a reduction in fatigue of the operator.

### (Operation Example 2)

As another operation example, there is now described an example in which the operation device 41 is operated to perform arm pulling in the air and perform lowering of the boom 4 and the arm pulling operation is continued also after a bucket claw tip comes in contact with the ground. FIG. 11 is a view illustrating an operation example 2.

In a case the operation device 41 is operated to perform arm pulling in the air and perform boom lowering and the arm is continuously pulled also after the bucket claw tip comes in contact with the ground, the pilot-operated check valve 53 does not open in a mode in which the boom assist function is invalidated (normal mode) (see FIG. 4), and the bucket claw tip is dug into the ground or the machine body is jacked up until a rod pressure of the boom cylinder 7 reaches a relief pressure of the over-load relief valve 28b. As a result, a sufficient excavating force can be achieved in work of excavating a hard ground.

In the boom float mode, on the other hand, the pilot-operated check valve 53 opens (see FIG. 4), and the set pressure Ps_tgt of the variable relief valve is the minimum value Ps_min (for example, 0 (zero) MPs) (see FIG. 5), so that a hydraulic fluid in the rod hydraulic line 72 of the boom cylinder 7 is discharged into the hydraulic fluid tank at the minimum pressure. At this time, the boom cylinder 7 moves substantially freely toward the boom raising side due to a reaction force from the ground, and only a force substantially equivalent to the own weight of the front work device 3 is applied to the bucket claw tip. As a result, it is possible to perform work of skimming the ground without the boom raising operation, and hence, it is possible to easily perform, for example, work of scooping concreate rubbles on a steel plate.

Moreover, in a case the arm is operated while the boom lowering operation is still active in a state in which the bucket claw tip is in contact with the ground, the bottom hydraulic line 71 of the boom cylinder 7 is connected to the rod hydraulic line 72 via the hydraulic internal regeneration line of the directional control valve 23c, in a case the boom cylinder 7 moves freely toward the lowering side according to the arm operation in the float mode (for example, an arm pushing operation), a hydraulic fluid in the bottom hydraulic line 71 of the boom cylinder 7 flows back to the rod hydraulic line 72, and hence, a smooth operation can be performed.

Moreover, in the press mode, it is possible to change the set pressure of the variable relief valve according to a pressing force adjustment parameter set by an operator (see FIG. 7), and the boom cylinder pressure can be maintained according to a set pressure which is set by the controller 40, in a case hydraulic fluid is discharged from the rod hydraulic line 72 of the boom cylinder 7 into the variable relief valve 51. As a result, the pressing force of the bucket claw tip can be adjusted, and hence, it is possible to easily perform light excavation such as dredging work, for example.

In such a ground-following operation as described above which requires a hydraulic working fluid to be supplied to the bottom side of the boom cylinder 7, the hydraulic working fluid is supplied via the check valve 52 of the boom assist valve 50 to the bottom hydraulic line 71 of the boom cylinder 7 from the hydraulic tank return line (tank hydraulic line 73), thereby preventing cavitation. That is, while it is conceivable that, since the over-load relief valve 28b having the makeup function is limited in size, valve supply performance may be insufficient with only the supply of the makeup flow rate from the over-load relief valve 28b, it is possible to achieve the sufficient supply of a hydraulic working fluid by using the check valve 52 provided outside according to the present invention.

### (Operation Example 3)

As another operation example, there is now described an example in which an operation is performed during the jack up.

In a case the operation device 41 is operated to perform such an operation as the boom lowering operation and the arm pulling operation in the float mode during the jack up, the pilot-operated check valve 53 does not open (see FIG. 4). In a case the bucket 6 is pressed against the ground after the jacked-up state is once canceled, on the other hand, the pilot-operated check valve 53 opens according to the work mode. If the pilot-operated check valve 53 is opened in a case the set pressure of the variable relief valve is low during the jack up, hydraulic fluid on the rod side of the boom cylinder 7 is quickly discharged into the hydraulic fluid tank, and hence, there is a possibility that the machine body in the jacked-up state may quickly fall down. In contrast, according to the present invention, the jacked-up state can be maintained, and work can thus safely be performed.

### (Operation Example 4)

There is now described an example in which the boom is raised in the air in the float mode.

In a case the operation device 41 is operated to perform the boom raising operation and the boom raising operation is then stopped, there is a possibility that stopping performance may decrease at the time in a case the boom rod pressure is low. In the present invention, on the other hand, in a case a single boom raising operation is performed, the processing in Step S44 of FIG. 4 transitions to the processing in Step S47, and the pilot-operated check valve 53 is closed. Thus, the boom rod pressure increases to the maximum over-load relief pressure, and hence, the stopping performance of the boom 4 is secured.

### (Operation Example 5)

There is now described an example in which the operation device 41 is operated to perform a fine boom raising operation and the arm pulling operation in the air in the float mode and the bucket claw tip comes in contact with the ground.

In a case the operation device 41 is operated to perform the fine boom raising operation and the arm pulling operation in the air in the float mode and the bucket 6 comes in contact with the ground, the boom cylinder load Fc is determined to be lower than the load of the operation in the air in the processing in Step S45 of FIG. 4, and hence, the pilot-operated check valve 53 opens. As a result, also in a case the operation of pulling the arm 5 is continued, a hydraulic fluid in a rod chamber of the boom cylinder 7 is discharged from the variable relief valve 51, a hydraulic working fluid is supplied via the check valve 52 of the boom assist valve 50 to a bottom chamber of the boom cylinder 7 from the hydraulic tank return line (tank hydraulic line 73), and hence, a floating state can be achieved.

### (Operation Example 6)

There is now described an example in which the operation device 41 is operated to perform the boom raising operation and the arm pulling operation in the air in the float mode and then the boom is stopped.

In a case the boom raising operation and the arm pulling operation are performed in the air in the float mode and then the boom is stopped, the boom cylinder load is equal to or higher than the second cylinder load threshold value th2, and the processing in Step S45 of FIG. 4 thus transitions to the processing in Step S47 to close the pilot-operated check valve 53. Thus, the boom rod pressure increases to the maximum over-load relief pressure, and hence, the stopping performance of the boom 4 is secured.

### (Effects of First Embodiment)

A description is now given of effects of the present embodiment configured as described above.

In the present embodiment, the control of lowering the boom in the air in the normal mode is common to that in the float mode, and hence, it is possible to minimize a sense of discomfort of operability. In addition, with use of a general directional control valve having the three positions, the control performance and the pressure loss similar to those of the conventional configuration can be achieved. Moreover, the variable relief valve 51 is provided, and the press mode in which a pressing force is adjustable is provided independently of the float mode, thereby being able to reduce work load on an operator at the time of, for example, maintaining a pressing force of a chisel during work using a breaker or performing light excavation during dredging work.

Further, the makeup for the boom-cylinder bottom hydraulic line in the ground-following operation is performed with use of the check valve 52 inside the boom assist valve 50, thereby being able to minimize a risk of the cavitation.

In addition, the boom assist valve 50 according to the present embodiment can easily be applied to a system of a conventional hydraulic excavator having a meter-in cut function used at the time of lowering a boom in the air. That is, it is possible to appropriately switch between the conventional hydraulic excavator and the hydraulic excavator having the float mode and the press mode, by only adding or removing the boom assist valve 50 and adding or removing controller input/output (I/O) and control, and hence, it is possible to provide this configuration as an option or to retrofit an existing hydraulic excavator with this configuration.

Moreover, in the present embodiment, the pilot-operated check valve 53 is provided upstream of the variable relief valve 51. In a case the maximum settable pressure of the variable relief valve is sufficiently high, the pilot-operated check valve 53 is not required. However, it is generally difficult to manufacture a variable relief valve which can change a relief pressure up to an upper limit pressure of a system, and hence, there is a possibility that an over-load relief pressure of a boom rod hydraulic line may decrease. In this case, as behavior of a machine body, for example, the machine body may fail to resist against an external force in a case excavating a hard ground, and a boom may thereby move up, resulting in decrease of machine body performance. According to the present embodiment, the pilot-operated check valve 53 is closed in the normal mode to interrupt connection of the hydraulic line with the variable relief valve 51, thereby being able to prevent the decrease in over-load relief pressure. With this configuration, the conventional machine body performance can be maintained. Moreover, the pilot-operated check valve is generally more excellent in leak performance than the relief valve, and hence, there is also provided an effect of minimizing an amount of the movement of the boom caused by the leak in a case not in operation.

### <Second Embodiment>

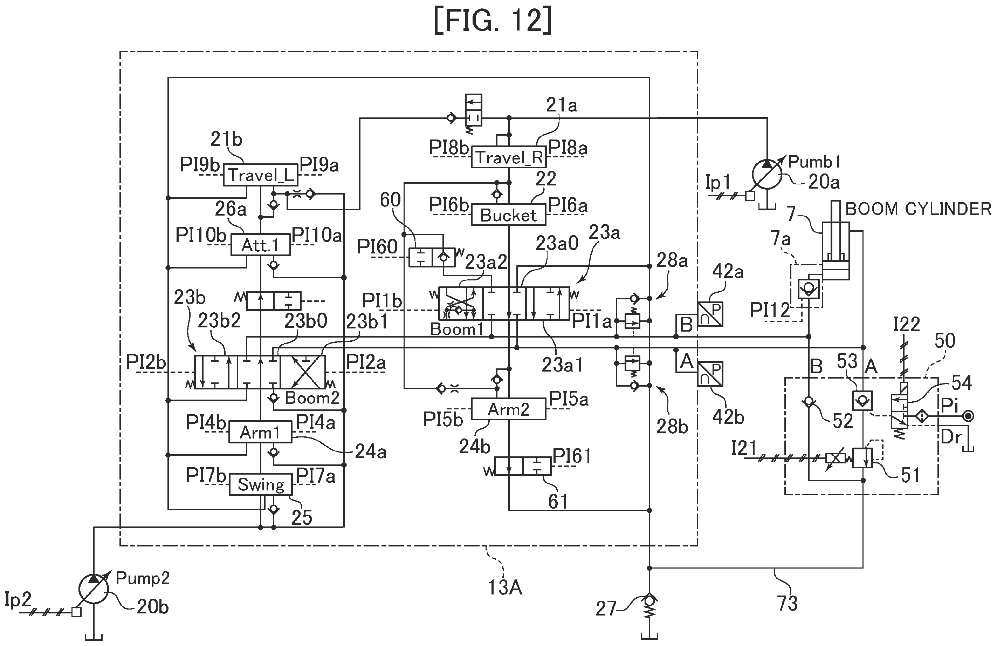

A description is now given of a second embodiment of the present invention with reference to FIG. 12 to FIG. 15.

In the present embodiment, two hydraulic pumps, that is, the first pump and the second pump, are used to drive each of the hydraulic actuators. Note that components in the present embodiment that are similar to those in the first embodiment are given the same reference characters, and a description thereof is appropriately omitted.

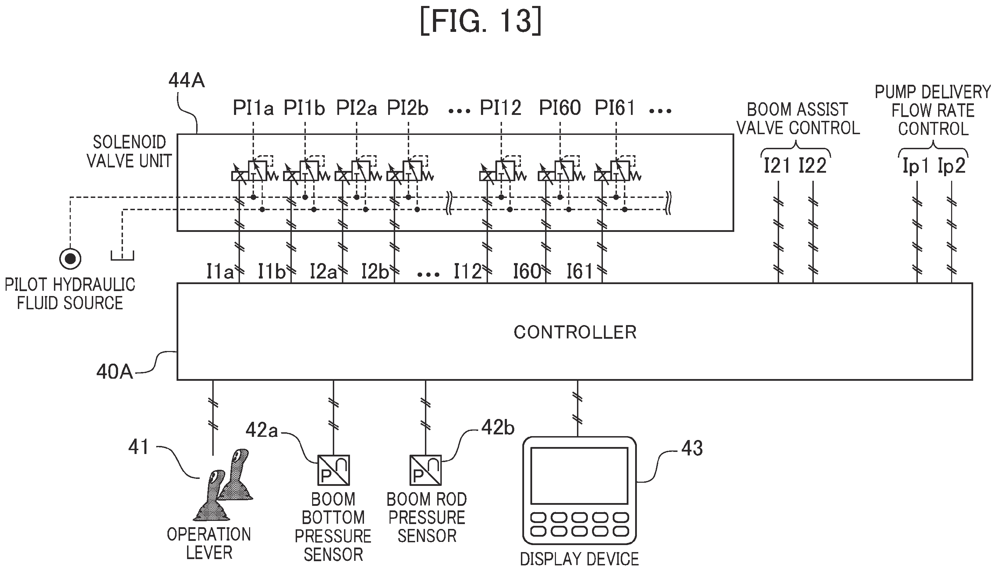

FIG. 12 is a diagram illustrating a hydraulic circuit system of a hydraulic excavator according to the present embodiment together with related components in an extracted manner. Moreover, FIG. 13 is a diagram schematically illustrating a configuration of a control system which controls an overall operation of the hydraulic excavator including the hydraulic circuit system according to the present embodiment. Note that, in FIG. 12, for the sake of simple illustration and description, the boom cylinder out of a plurality of hydraulic actuators and components related to the boom cylinder are illustrated as a typical example, and illustrations and descriptions of other hydraulic actuators are appropriately omitted.

In FIG. 12, the hydraulic circuit system includes the variable displacement hydraulic pumps (the first pump 20a and the second pump 20b) driven by the prime mover, a control valve 13A (main control valve) that controls flow rates and directions of hydraulic fluids supplied from the hydraulic pumps 20a, 20b, and 20c to the hydraulic actuators including the hydraulic cylinders 7, 8, and 9, the hydraulic motors 12, and the like, and the boom assist valve 50 (additional control valve) provided on the hydraulic line which branches toward the hydraulic fluid tank (hydraulic working fluid tank) side from the hydraulic lines (the bottom hydraulic line 71 and the rod hydraulic line 72) connecting the control valve 13A and the hydraulic actuator (boom cylinder 7 herein) to each other. Moreover, on the bottom hydraulic line 71 of the boom cylinder 7, there is provided the pilot-operated check valve 7a (boom holding valve) which switches, according to a control pressure from the control system, between permission and interruption of the flow of a hydraulic fluid from the rod hydraulic line 72 to the variable relief valve 51. Tilting angles (pump delivery flow rates) of the first pump 20a and the second pump 20b are controlled according to the control currents Ip1 and Ip2, respectively, output from the control system.

The control valve 13A includes the right-travel-hydraulic-motor directional control valve 21a (Travel_R), the bucket-cylinder directional control valve 22 (Bucket), the arm-cylinder second directional control valve 24b (Arm2), and the boom-cylinder first directional control valve 23a (Boom1), which are connected to the hydraulic delivery line of the first pump 20a (Pump1), and the left-travel-hydraulic-motor directional control valve 21b (Travel_L), the attachment first directional control valve 26a (Att.1), the arm-cylinder first directional control valve 24a (Arm1), the boom-cylinder second directional control valve 23b (Boom2), and the swing-hydraulic-motor directional control valve 25 (Swing), which are connected to the hydraulic delivery line of the second pump 20b.

Moreover, a flow control valve 60 is provided between the hydraulic delivery line of the first pump 20a and the boom-cylinder first directional control valve 23a (Boom1) and is driven by an operation pilot pressure IP60. The flow control valve 60 is configured to reduce an opening degree as the operation pilot pressure IP 60 increases.

At the lowering-side position 23a2 of the boom-cylinder first directional control valve 23a (Boom1 directional control valve), there are provided a meter-in hydraulic line which establishes connection from the hydraulic delivery line of the first pump 20a to the rod hydraulic line 72 of the boom cylinder 7, a meter-out hydraulic line which establishes connection from the bottom hydraulic line 71 to the hydraulic tank return line (tank hydraulic line), and a regeneration hydraulic line which establishes connection from the bottom hydraulic line 71 via a check valve to the rod hydraulic line 72.

Moreover, at the lowering-side position 23b2 of the boom-cylinder second directional control valve 23b (Boom2 directional control valve), a meter-in hydraulic line and a meter-out hydraulic line similar to those of the boom-cylinder first directional control valve 23a are provided.

At the most downstream position of the hydraulic delivery line of the first pump 20a, a bypass cut valve 61 is provided and is driven by an operation pilot pressure IP61. The bypass cut valve 61 is configured to reduce an opening degree as the operation pilot pressure PI61 increases.

As illustrated in FIG. 13, the control system includes a controller 40A, a solenoid valve unit 44A, the operation device 41 and the display device 43 which are provided in the cabin 2a, the boom bottom pressure sensor 42a provided on the bottom hydraulic line 71, the boom rod pressure sensor 42b provided on the rod hydraulic line 72, and the like.

The controller 40A generates, on the basis of an operation signal from the operation device 41, sensing signals from the sensors 42a and 42b, setting information from the display device 43, and the like, control signals I1a, I1b, ..., I12, IP60, IP61, ... which are to be output to the solenoid valve unit 44A, the control currents I21 and I22 which are to be output to the variable relief valve 51 and the solenoid selector valve 54 of the boom assist valve 50, and the control currents Ip1 and Ip2 which are to be output to the hydraulic pumps 20a and 20b.

The solenoid valve unit 44A includes a plurality of proportional solenoid valves corresponding to the respective directional control valves 21a, 21b, 22, 23a, 23b, 24a, 24b, 25, and 26a of the control valve 13A. The solenoid valve unit 44A drives, according to a control command generated by the controller 40A on the basis of an operation performed on the operation device 41, each of the proportional solenoid valves of the solenoid valve unit 44 to generate each of the operation pilot pressures PI1a, PI1b, ..., PI12, IP60, IP61, ..., and uses the generated operation pilot pressure to drive a corresponding one of the directional control valves of the control valve 13A, thereby operating each of the hydraulic actuators 7, 8, 9 forming the front work device 3, for example.

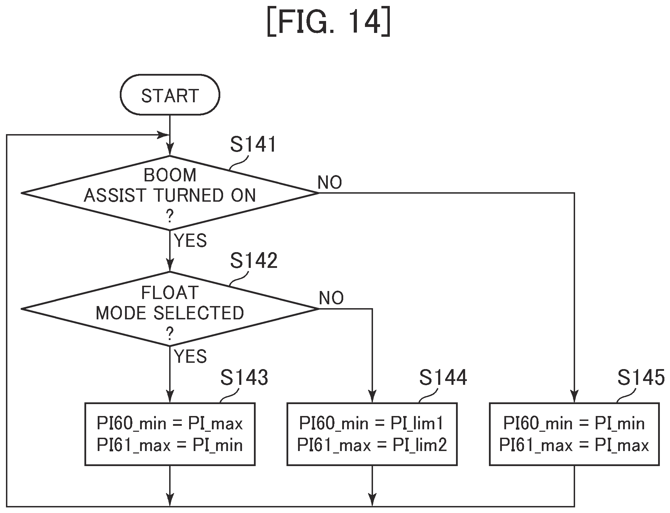

FIG. 14 is a flowchart illustrating contents of processing of controlling the flow control valve connected to the boom-cylinder first directional control valve and the bypass cut valve connected to the hydraulic delivery line of the first pump.

In FIG. 14, the controller 40A first acquires setting information from the display device 43 and determines whether or not the boom assist function is set valid (Step S141).

In a case a determination result in Step S141 is YES, that is, in a case the boom assist function is set valid (in the case of the boom assist mode), the controller 40A subsequently determines whether or not the float mode is further selected in the boom assist mode (Step S142).

In a case a determination result in Step S142 is YES, that is, in a case the float mode is selected, the controller 40A subsequently sets a control pressure lower limit value PI60_min of the flow control valve 60 to the upper limit value PI_max (for example, 4 MPa) of the pilot system, sets a control pressure upper limit value PI61_max of the bypass cut valve 61 to PI_min (for example, 0 (zero) MPa) (Step S143), and returns to the processing in Step S141.

On the other hand, in a case the determination result in Step S141 is NO, that is, in a case the boom assist function is set invalid (in the case of the normal mode), the controller 40A sets the control pressure lower limit value PI60_min of the flow control valve 60 to PI_min (for example, 0 (zero) MPa), sets the control pressure upper limit value PI61_max of the bypass cut valve 61 to the upper limit value PI_max (for example, 4 MPa) of the pilot system (Step S145), and returns to the processing in Step S141.

Further, in a case the determination result in Step S142 is NO, that is, in a case the press mode is selected, the controller 40A subsequently sets the control pressure lower limit value PI60_min of the flow control valve 60 to a first limit value PI_lim1, sets the control pressure upper limit value PI61_max of the bypass cut valve 61 to a second limit value PI_lim2 (Step S144), and returns to the processing in Step S141. Here, the limit values PI_lim1 and PI_lim2 are values at which a minimum amount of a hydraulic fluid can flow from the hydraulic delivery line of the first pump 20a to the rod hydraulic line 72.

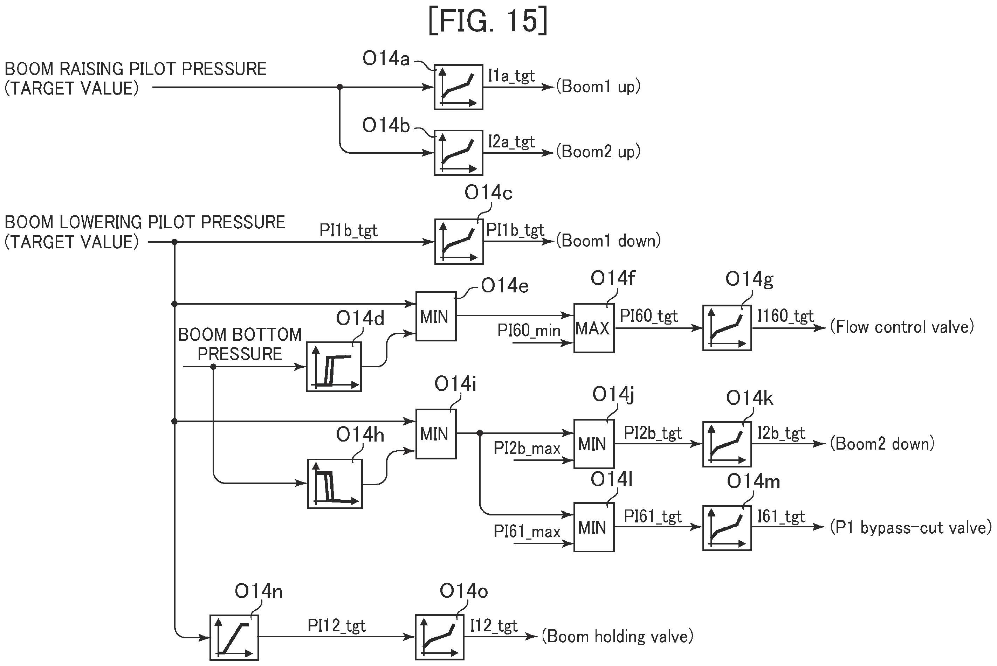

FIG. 15 is a diagram illustrating a computation function section which computes a target current value of a control current to be output to each of the solenoid proportional valves of the solenoid valve unit, for each of the directional control valves related to the boom cylinder.

As illustrated in FIG. 15, the computation function section of the controller 40A converts, for the boom raising operation, the target values (see FIG. 8) of boom raising pilot pressures (operation pilot pressures) into current values via table computation sections O14a and O14b and outputs the current values as the target current values I1a_tgt and I2a_tgt of control currents related to the boom raising operation for the directional control valves 23a and 23b, to the solenoid valve unit 44A.

Moreover, the computation function section of the controller 40A converts, for the boom lowering operation, the target value (see FIG. 8) of a boom lowering pilot pressure (operation pilot pressure) into a current value via a table computation sections O14c and outputs the current value as the target current value I1b_tgt of a control current related to the boom lowering operation for the directional control valve 23a, to the solenoid valve unit 44A.

The table computation section O14d converts a value sensed by the boom bottom pressure sensor 42a into a control pressure of the flow control valve 60 and outputs the control pressure to a minimum selection section O14e. Specifically, the table computation section O14d computes a control pressure in such a manner that the control pressure is 0 (zero) in a case the boom bottom pressure is low while the control pressure is a predetermined value in a case the boom bottom pressure is high. Note that, in the table computation section O14d, a computation table may have a hysteresis function.

The minimum selection section O14e selects, out of the target value of the boom lowering pilot pressure (operation pilot pressure) and the control pressure of the flow control valve 60 computed in the table computation section O14d, the minimum value and outputs the minimum value to a maximum selection section O14f.

The maximum selection section O14f selects, out of the output from the minimum selection section O14e and the control pressure lower limit value PI60_min of the flow control valve 60 (see FIG. 14), the maximum value converts the maximum value into a current value via a table computation section O14g and outputs the current value as a target current value I60_tgt of the control pressure of the flow control valve 60, to the solenoid valve unit 44A.

Moreover, a table computation section O14h converts a value sensed by the boom bottom pressure sensor 42a into a limit value of an operation pilot pressure for the directional control valve 23b and outputs the limit value to a minimum selection section O14i. Specifically, the table computation section O14h computes a limit value in such a manner that the limit value is 0 (zero) for a boom bottom pressure in the air and is the maximum pressure (for example, 4 MPa) of the pilot system for a boom bottom pressure at the time in a case the bucket comes in contact with the ground. Note that, in the table computation section O14i, in order to avoid generation of control hunting caused by a pressure variation of the boom bottom pressure, a computation table may have a hysteresis function.

The minimum selection section O14i selects, out of the target value of the boom lowering pilot pressure (operation pilot pressure) and the limit value of the boom lowering target pilot pressure computed in the table computation section O14h, the minimum value and outputs the minimum value to minimum selection sections O14j and 0141.

The minimum selection section O14j selects, out of the output from the minimum selection section O14i and the limit value PI2b_max (see FIG. 7) of the operation pilot pressure PI2b related to the boom lowering operation for the boom-cylinder second directional control valve 23b, the minimum value, converts the minimum value into a current value via a table computation section O14k, and outputs the current value as a target current value I2b_tgt of the control current related to the boom lowering operation for the directional control valve 23b, to the solenoid valve unit 44A.

The minimum selection section 0141 selects, out of the output from the minimum selection section O14i and the control pressure upper limit value PI61_max (see FIG. 14) of the bypass cut valve 61, the minimum value, converts the minimum value into a current value via a table computation section O14m, and outputs the current value as a target current value I61_tgt of the control pressure of the bypass cut valve 61, to the solenoid valve unit 44A.

Moreover, the target value (see FIG. 8) of the boom lowering pilot pressure (operation pilot pressure) is converted into a control pressure target value of the boom holding valve (pilot-operated check valve 7a) via a table computation sections O14n, the control pressure target value is further converted into a current value via a table computation section O14o, and the current value is output as the target current value I12_tgt of the control current related to the boom holding valve, to the solenoid valve unit 44A.

Other configurations are similar to those of the first embodiment.

Also in the present embodiment configured as described above, there can be provided effects similar to those in the first embodiment.

Moreover, for example, the hydraulic excavator as a construction machine can be driven using fewer hydraulic pumps (main pumps) compared with the first embodiment, which offers excellent mountability and cost-effectiveness.

### <Others>

It is to be noted that the present invention is not limited to the above-mentioned embodiments and includes various modification examples within a scope not departing from the gist of the present invention. In addition, the present invention is not limited to one including all of the configurations described in the embodiments mentioned above, for example, and also includes one obtained by removing some of the configurations. Moreover, a part of a configuration related to a certain embodiment may be added to or replaced with a configuration related to another embodiment.

For example, in the present embodiment, the hydraulic excavator 100 including the front work device 3 has been illustrated as an example of a construction machine, and an example in which the boom cylinder 7 which drives the boom 4 is controlled according to the work mode has been described. However, the present invention is not limited to this example and may employ such a configuration that includes, as a work device, a blade provided to the lower travel structure 1 and controls a hydraulic actuator (hydraulic cylinder) which drives the blade, according to the work mode, for example.

Moreover, some of or all the components related to the above-mentioned controller or some of or all functions of the components and processes executed thereby may be implemented by hardware (for example, by designing a logic for carrying out each function, with use of an integrated circuit). Moreover, the component related to the above-mentioned controller may be a program (software) which is read out and executed by a computation processing device (for example, a central processing unit (CPU)), thereby implementing each function related to the component of the controller. Information regarding this program can be stored in, for example, a semiconductor memory (such as a flash memory and a solid-state drive (SSD)), a magnetic storage device (such as a hard disk), and a recording medium (such a magnetic disk and an optical disc).

### Description of Reference Characters

1: Lower travel structure
2: Upper swing structure
2a: Cabin
3: Front work device
4: Boom
5: Arm
6: Bucket
7: Boom cylinder
7a: Pilot-operated check valve
8: Arm cylinder
9: Bucket cylinder
10: Track frame
11: Crawler belt
12: Travel device
13, 13A: Control valve
20a: First pump
20b: Second pump
20c: Third pump
21a: Right-travel-hydraulic-motor directional control valve
21b Left-travel-hydraulic-motor directional control valve
22: Bucket-cylinder directional control valve
23a: Boom-cylinder first directional control valve
23b: Boom-cylinder second directional control valve
23c: Boom-cylinder third directional control valve
24a: Arm-cylinder first directional control valve
24b: Arm-cylinder second directional control valve
25: Swing-hydraulic-motor directional control valve
26a: Attachment first directional control valve
26b: Attachment second directional control valve
28a: Over-load relief valve
28b: Over-load relief valve
40, 40A: Controller
41: Operation device
41a: Operation lever
41b: Operation amount sensor
42a: Boom bottom pressure sensor
42b: Boom rod pressure sensor
43: Display device
44, 44A: Solenoid valve unit
50: Boom assist valve
51: Variable relief valve
52: Check valve
53: Pilot-operated check valve
54: Solenoid selector valve
60: Flow control valve
61: Bypass cut valve
71: Bottom hydraulic line
72: Rod hydraulic line
73: Tank hydraulic line
100: Hydraulic excavator

## Claims

1. A construction machine comprising:
a machine main body;
a work device that is rockably mounted on the machine main body;
a variable displacement hydraulic pump that is driven by a prime mover incorporated in the machine main body;
a hydraulic cylinder that drives the work device by using a hydraulic fluid delivered from the hydraulic pump;
a main control valve that is provided between the hydraulic pump and the hydraulic cylinder and controls a flow rate and a direction of a hydraulic fluid supplied from the hydraulic pump to the hydraulic cylinder;
an additional control valve that is provided on a hydraulic line respectively connecting a bottom-side hydraulic line connecting the main control valve and a bottom side of the hydraulic cylinder, a rod-side hydraulic line connecting the main control valve and a rod side of the hydraulic cylinder, and a tank-side hydraulic line returning a hydraulic fluid to a hydraulic fluid tank; and
a controller that controls the main control valve and the additional control valve on a basis of the operation signals output from the operation device, wherein
the main control valve includes
at least one meter-in control valve that controls a flow rate of a hydraulic fluid supplied from the hydraulic pump to a rod chamber of the hydraulic cylinder via the rod-side hydraulic line, and
at least one meter-out control valve that controls a flow rate of a hydraulic fluid returned from a bottom chamber of the hydraulic cylinder to the hydraulic fluid tank via the bottom-side hydraulic line and the tank-side hydraulic line,
the additional control valve includes
a variable relief valve that is provided between the rod-side hydraulic line and the tank-side hydraulic line and controls a pressure in the rod-side hydraulic line such that the pressure is equal to or lower than a predetermined target pressure, and
a check valve that permits only a flow of a hydraulic fluid from the tank-side hydraulic line to the bottom-side hydraulic line, and
the controller closes the meter-in control valve of the main control valve, sets the target pressure of the variable relief valve to a minimum value of a predetermined pressure range, and discharges a hydraulic fluid in the rod-side hydraulic line into the hydraulic fluid tank, in a case a work mode switching device that performs switching of a work mode of the work device switches the work mode to a float mode in which work is performed using an own weight of the work device.

2. The construction machine according to claim 1, wherein
the controller, in a case the work mode switching device switches the work mode to a press mode in which work is performed with the work device pressed against a target,
determines whether or not the work device is in contact with ground,
closes the meter-in control valve of the main control valve in a case determining that the work device is not in contact with the ground,
opens the meter-in control valve of the main control valve according to output of an operation signal from the operation device in a case determining that the work device is in contact with the ground, with the work mode switched to a normal mode by the work mode switching device, and
sets an opening degree of the meter-in control valve of the main control valve to be smaller than an opening degree in the normal mode in a case determining that the work device is in contact with the ground, with the work mode switched to the press mode by the work mode switching device.

3. The construction machine according to claim 1, wherein
the work device rockably mounted on the machine main body is an articulated front work device including a boom, an arm, and a work tool rotatably connected to one another, and
the hydraulic cylinder that drives the work device is a boom hydraulic cylinder that drives the boom.

4. The construction machine according to claim 1, further comprising:
a pilot-operated check valve that is provided between the rod-side hydraulic line and the variable relief valve and switches between permission and interruption of a flow of a hydraulic fluid from the rod-side hydraulic line to the variable relief valve, wherein
the controller closes the pilot-operated check valve to interrupt the flow of the hydraulic fluid from the rod-side hydraulic line to the variable relief valve, in a case determining that the work device is in contact with the ground, with the work mode switched to the float mode by the work mode switching device.

5. The construction machine according to claim 1, wherein
the main control valve includes at least one regeneration control valve that controls a flow rate of a hydraulic fluid that flows from the bottom-side hydraulic line to the rod-side hydraulic line,
the controller closes the meter-in control valve of the main control valve, sets the target pressure of the variable relief valve to the minimum value of the predetermined pressure range, and establishes connection between the rod chamber of the hydraulic cylinder and the hydraulic fluid tank, in a case the work mode switching device that performs switching of the work mode of the work device switches the work mode to the float mode in which work is performed using the own weight of the work device, and
the regeneration control valve is switched to permit the flow of the hydraulic fluid from the bottom-side hydraulic line to the rod-side hydraulic line on a basis of an operation signal output from the operation device.
